# EUROPEAN PATENT SPECIFICATION

(11) **EP 3 459 778 B1**
(45) Date of publication and mention of the grant of the patent: **21.07.2021**
(21) Application number: 18188863.7
(22) Date of filing: 14.08.2018
(51) Int. Cl.: B60K 15/04, B67D 7/00, B60K 15/03

(54) **VOLATILE LIQUIDS REFUELING APPARATUS WITH DOUBLE LOCKING RECEIVER**
VORRICHTUNG ZUR NACHFÜLLUNG FLÜCHTIGER FLÜSSIGKEITEN MIT DOPPELTEM VERRIEGELUNGSEMPFÄNGER
APPAREIL DE RAVITAILLEMENT DE LIQUIDES VOLATILS AVEC RÉCEPTEUR À DOUBLE VERROUILLAGE

(30) Priority: 20.09.2017 US 201715710113
(43) Date of publication of application: 27.03.2019
(73) Proprietor: Motion Pro. Inc., Loomis, CA 95650 (US)
(72) Inventor: Scott, Steven Richard, Curlew, WA 99118 (US)
(74) Representative: Dolleymores

(56) References cited:
- US-A- 4 040 458
- US-A- 5 901 887
- US-A1- 2008 156 800
- US-A1- 2016 347 603
- US-B2- 9 534 621

## Description

### TECHNICAL FIELD

The present invention relates generally to devices for refueling mechanical engines.

### BACKGROUND ART

There are several situations in which motorized equipment operates using a supply of volatile fuel such as gasoline or kerosine. When equipment must be operated continuously in order to function properly, there is a need to replenish the supply of fuel quickly, safely, and possibly while the motorized equipment continues to function uninterrupted.

One such example of this kind of situation is when gasoline-powered chain saws are used to cut away brush and foliage during a forest fire, in order to create fire breaks. When a fire-fighter needs to refuel his saw, while acting in a dangerous environment with open flames near at hand, it is extremely crucial that transfer of flammable fuel is conducted in an extremely safe manner. Since gasoline is notoriously volatile, it is extremely important that refueling operations do not allow the release of volatile vapors that can ignite with potentially deadly consequences. Thus there is a need for an apparatus and method that can transfer volatile fluids in a manner which contains flammable vapors from the fuel as it is being transferred to the operating saw.

During operation in firefighting, the fuel tanks in gasoline powered saws build up excess pressure due to heat. The fuel tanks and caps in these saws are not capable of venting this excess pressure and when the cap is opened during the fueling process, fuel vapor is released under pressure causing a severe safety hazard. A method of safely relieving the pressure buildup inside the fuel tank before the cap is opened is necessary.

What is needed is a system that will eliminate the need for fuel or vapor to be exposed to the atmosphere during the refueling process. This method of refueling is called a "Dry Break System". The basic system works on a fluid exchange principle, instead of a displacement principle. Typically, it is necessary to open both the fuel cap on the saw in addition to the cap on the fuel can, and then pour liquid fuel into the saw exposing both the fuel and vapor to the atmosphere. In contrast a dry break system is sealed. Once the fuel probe and the fuel tank are connected, fluid is simply exchanged from one to the other.

Thus, there is a need for a volatile liquids refueling apparatus which contains volatile fuel vapors during refueling operations.

US2008/156800 and US2016/347603 disclose volatile liquid refueling apparatus.

### DISCLOSURE OF INVENTION

The invention provides a receiver for a volatile liquid refueling apparatus as claimed in claim 1, a volatile liquid refuselling apparatus as claimed in claim 2, and a vapour-tight compound enclosure as claimed in claim 3.

An advantage of the present invention is that it contains volatile vapors as fuel is transferred.

Another advantage is that the apparatus of the present invention can be locked in either the open position so the user can fill or empty a tank without the use of the probe if necessary, using the chainsaw bar tool or screwdriver, or in the closed position, to prevent spillage during transport.

A further advantage of the present invention is that the receiver can use a tube design with a single spring, thus reducing the cost of manufacturing and greatly simplifying the design.

Another advantage of the present invention is that the apparatus can be installed using a standard chain saw bar tool instead of multiple bolts to secure and seal it to the tank. The probe is designed to be attached to a standard SIG fuel bottle (camping fuel bottle). The probe can be installed on the fuel bottle without the use of tools by incorporating a grip onto the adaptor.

Yet another advantage of the present invention is that the typical tank of a chain saw can be filled in less than 15 seconds from empty to full.

Another advantage of the present invention is that it works on a fluid exchange principle, instead of a displacement principle.

By the inclusion of springs in the probe and the receiver of the system an additional level of safety in the field is added because if the device being fueled and the fuel bottle are dropped in an emergency situation (for example running from sudden fire surge or falling tree limb) the springs will act to automatically disengage the fuel bottle from the device being fueled and close themselves off, and thereby prevent accidental fuel spill and potential for a dangerous flammable fuel spill. Existing devices do not have this feature and will not necessarily disengage if the user drops them or stops putting pressure on the filler side to hold it into the receiver side. This feature adds a significant level of added safety when the device is being used in a firefighting scenario or other situation where a fuel spill could pose extreme danger to the user and anybody close by.

These and other advantages of the present invention will become clear to those skilled in the art in view of the description of the best presently known mode of carrying out the invention of the preferred embodiment as described herein and as illustrated in the several figures of the drawings.

### BRIEF DESCRIPTION OF THE DRAWINGS

The purposes and advantages of the present invention will be apparent from the following detailed description in conjunction with the appended drawings in which:
Fig. 1 shows an exploded view of the major elements of the present invention in use with the tank of a fueled device;

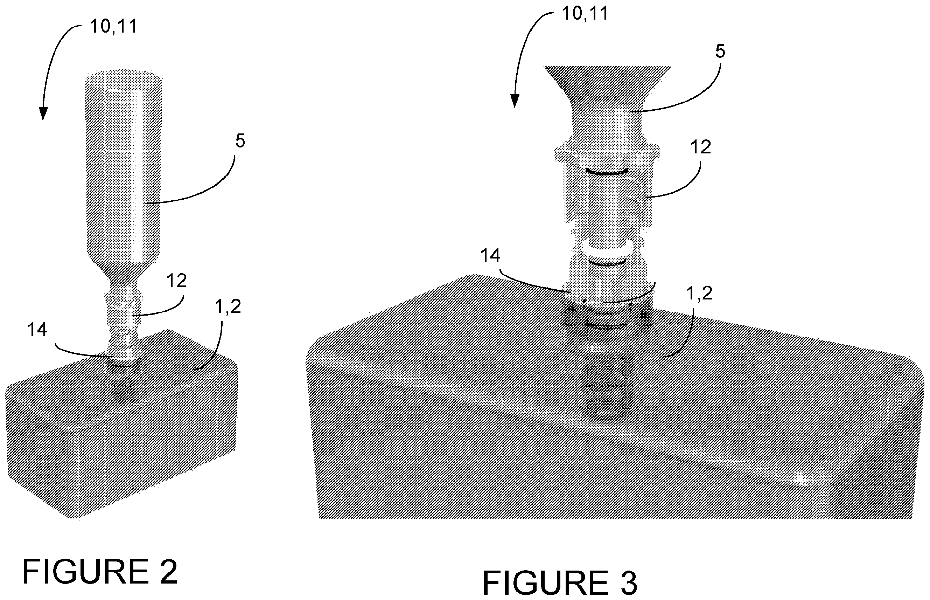

Fig. 2 shows the present invention in use with the tank of a fueled device;
Fig. 3 shows a detailed view of the present invention in use with the tank of a fueled device;
Fig. 4A shows a probe portion;
Fig. 4B shows a cut-away view of the probe as taken through line B-B of Fig. 4A;
Fig. 5A shows a receiver portion;
Fig. 5B shows a cut-away view of the receiver as taken through line B-B of Fig. 5A;
Fig. 6 shows a cut-away view of the apparatus in the first stage of attachment;
Fig. 7 shows a cut-away view of the apparatus in the second stage of attachment;
Fig. 8 shows a cut-away view of the apparatus in the third stage of attachment;
Fig. 9 shows an isometric view of the receiver portion of the present apparatus with the lock-down nut and channel;
Fig. 10 shows an isometric view with cut-away of the receiver portion of the present apparatus engaged with a screwdriver to engage the lock-down mechanism;
Fig. 11 shows an isometric view of the receiver portion of the present invention with the lock-down nut and channel which locks in both open and closed configurations, which is positioned in the lock closed position;
Fig. 12 shows an isometric view with cut-away of the receiver portion of the present invention which locks in both open and closed configurations engaged with a screwdriver to engage the locking mechanism in the lock closed position;
Fig. 13 shows an isometric view of the receiver portion of the present invention with the lock-down nut and channel which locks in both open and closed configurations, which is positioned in the lock open position; and
Fig. 14 shows an isometric view with cut-away of the receiver portion of the present invention which locks in both open and closed configurations engaged with a screwdriver to engage the locking mechanism in the lock open position.

### DETAILED DESCRIPTION OF THE PREFERRED EMBODIMENTS

A volatile liquids refueling apparatus includes a probe **12** and a receiver **14,** and together the overall apparatus will be referred to as the refueling apparatus **10.** The present refueling apparatus **10** provides a vapor-tight enclosure **11,** which allows the transfer of volatile liquids while containing any ignitable vapors

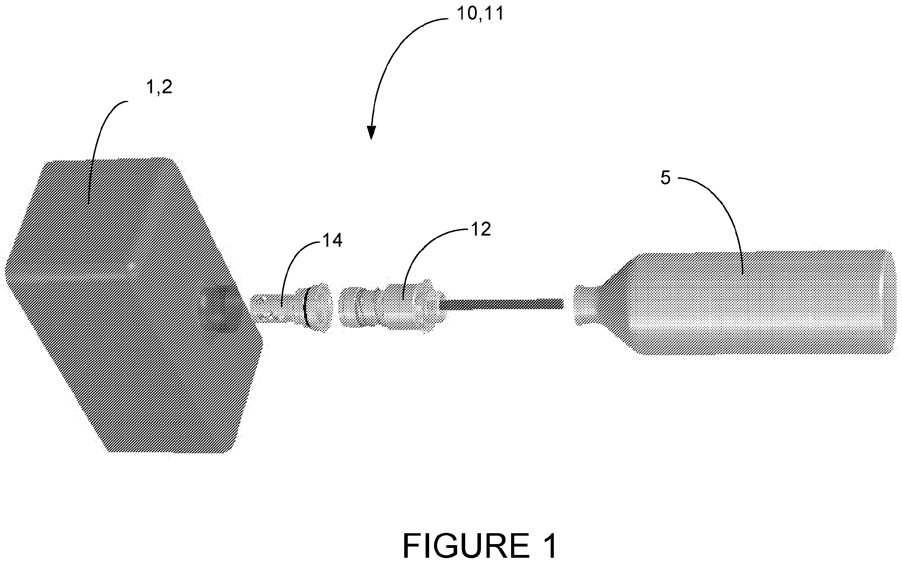

The refueling apparatus **10** is designed to work with a fueled device, such as a chain saw (not shown), illustrated in Fig. 1, which may be in need of refueling during continuous operations, such as when being used to create fire breaks when fighting forest fires. The chain saw has a fuel tank **2** with an input port **3** which is closed with a cap (not shown). When in use, the receiver **14** replaces the cap on the fuel tank **2.**

The probe **12** is attached or connected to a refueling source, such as a fuel bottle **5,** which is typically a bottle or possible a hose that supplies fuel through the probe **12.**

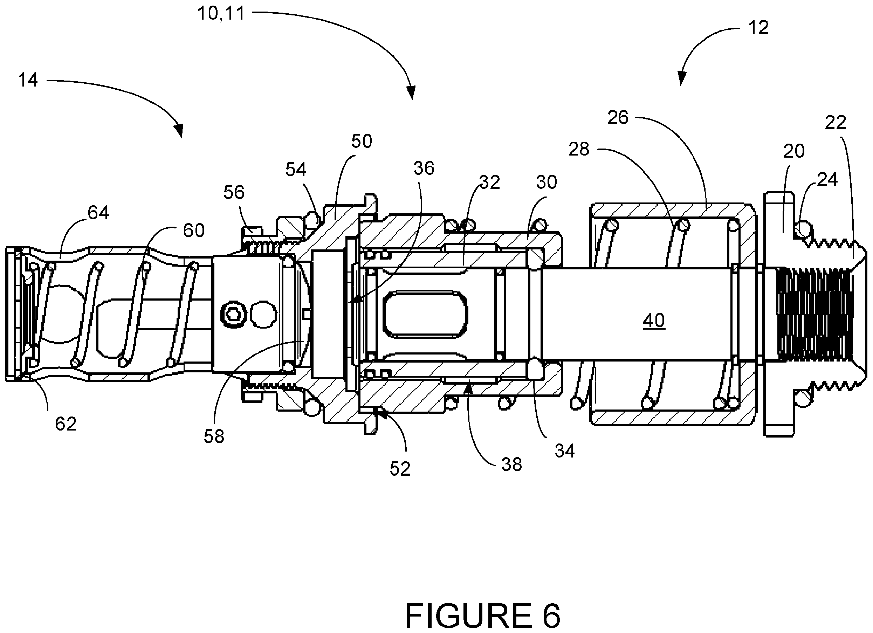

When in use, the probe **12** with attached fuel bottle **5** engages the receiver **14** which has been stationed in the tank **2** of the chain saw. The attachment of the probe **12** takes place in three basic stages, which are illustrated in Figs. 6-8, and will be discussed in detail below.

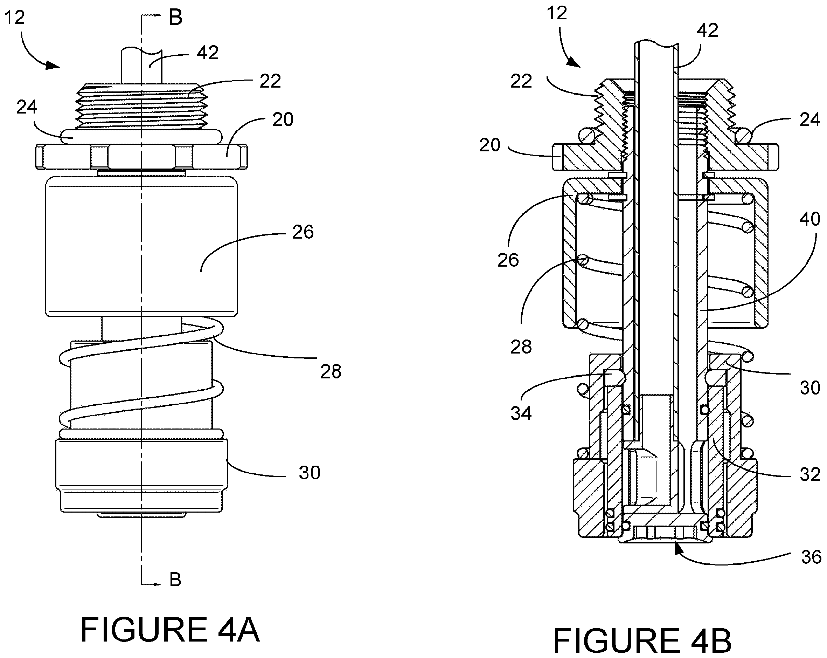

The probe **12** is shown in Fig. 4A and in cross-section in Fig. 4B, which is taken from line A-A in Fig. 4A. Referring now to both Figs. 4A and 4B, the probe **12** includes fuel bottle adaptor **20** having screw threads **22,** an O-ring **24,** spring cup **26,** spring **28,** outer collar **30,** seal ring **32,** slip ring **34** and aperture **36.** Running through the middle of the structure is a central tube **40,** which extends into the fuel bottle **5** (see Fig. 1) and directs fuel through the receiver **14** to the fuel tank **2.**

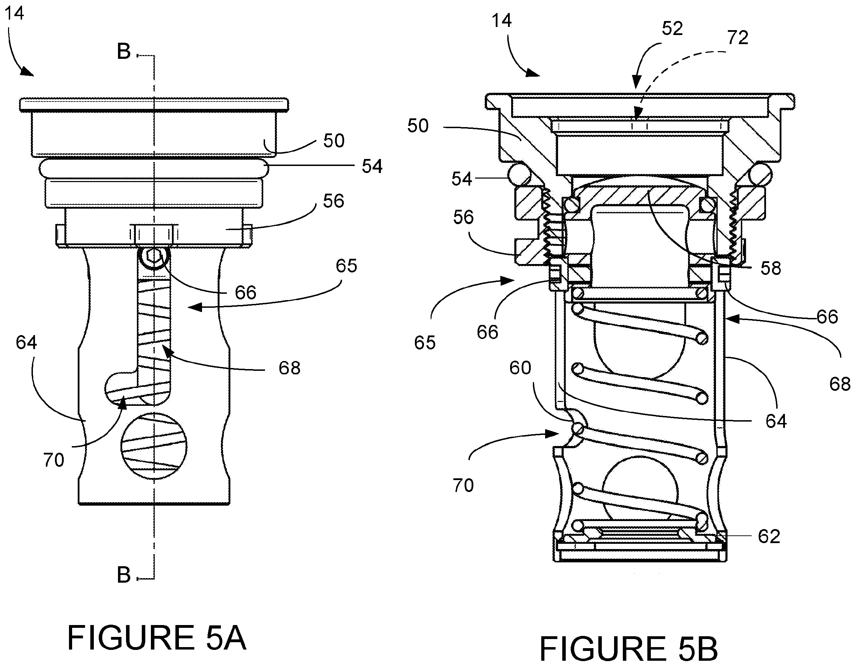

The receiver **14** is shown in Fig. 5A and in cross-section in Fig. 5B, which is taken from line B-B in Fig. 5A. Referring now to both Figs. 5A and 5B, the receiver **14** includes receiver collar **50,** receiver aperture **52,** O-ring **54,** lower adapter **56,** plunger **58,** spring **60,** lower spring plate **62** and receiver housing **64.** Also included are a lock-down nut **66** and a lock down channel **68,** which will be discussed in more detail below.

Figs. 6-8 show the three stages of attachment between the probe **12** and the receiver **14.** It will be assumed that the receiver **14** has been secured onto the chain saw fuel tank **2** in place of the cap, using the lower adaptor **56.** The receiver **14** is installed by removing the original cap, dropping the receiver **14** into the input port (see Fig. 1) and tightening it using the large hex end of a bar tool. The lower adaptor **56** and O-ring **54** configuration are made to fit the same as the original cap, and is preferably made almost entirely of 6061-T6 aluminum in order to keep weight to a minimum and improve durability. Also, vent tube **42,** shown in Fig. 4A-B is not shown, but extends from within central tube **40** into the fuel bottle, also not shown, in order to allow vapors to vent from the saw's fuel tank.

The probe **12** is designed to seal against the receiver **14** and is activated in **3** separate stages. The probe **12** includes a slip ring **34,** which allows the probe **12** to be extended in the correct order. This is a critical safety feature so that the probe **12** can only be extended if installed into the receiver **14.** At no time can it be accidently opened during transportation or storage.

In Stage 1, shown in Fig 6., the probe **12** is mated with the receiver **14** and is aligned as shown in Figs. 6, 7, and 8. At this point the receiving aperture **52** and the aperture **36** are aligned. During this stage the slip ring **34** is still in the locked position.

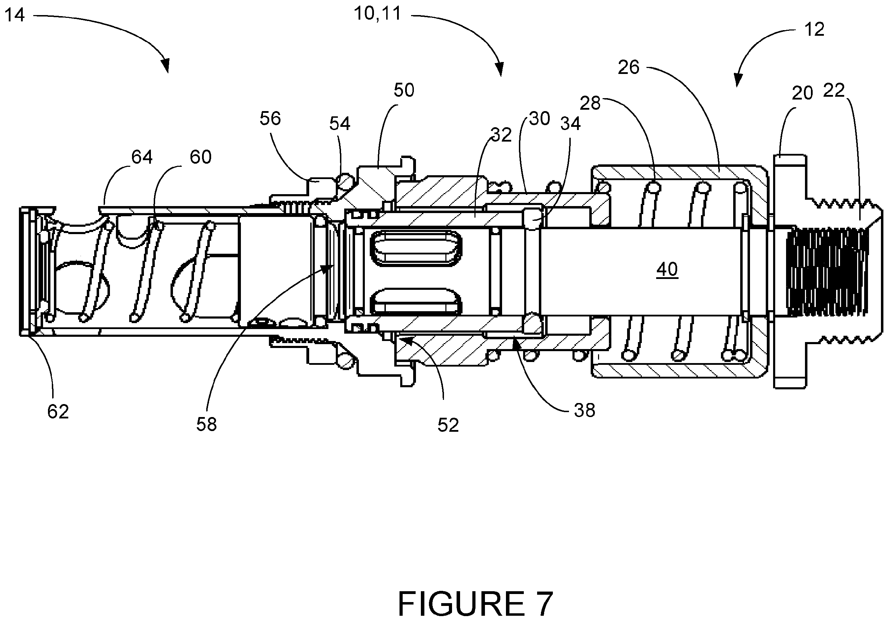

In Stage 2, as seen in Fig. 7, the probe **12** is inserted into the receiver **14** and a seal is made between the seal ring **32** and the receiver **14.** At this point the system is now in a sealed state and no vapors, pressure or fuel can escape into the atmosphere. In addition, the outer collar **30** is moved into position so that the slip ring **34** can be pushed up by the seal ring **32.** During this stage no fuel has been exchanged.

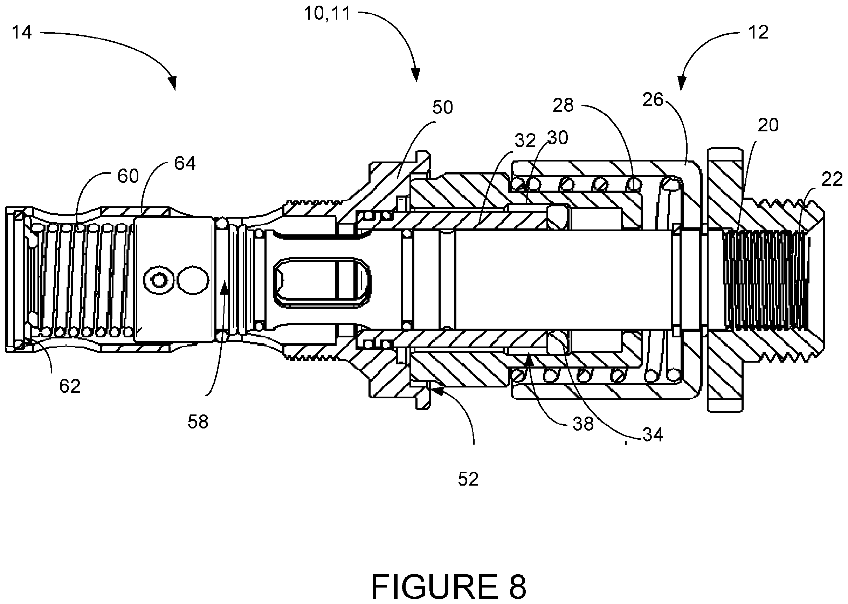

In Stage 3, as shown in Fig 8, the probe **12** is further inserted into the receiver **14.** As the probe extends it makes contact with the plunger **58** and is pressed down breaking the seal with the upper lip on the receiving collar **50.** At this point the seal is also broken between the central tube **40** and the seal ring **32** and allows fuel to flow and air to return though the vent tube **42.**

This works on a fluid exchange principle, instead of a displacement principle. Typically, it is necessary to open both the fuel cap on the saw in addition to the cap on the fuel can, and then pour liquid fuel into the saw exposing both the fuel and vapor to the atmosphere. In contrast, the present apparatus is sealed providing a vapor-tight compound enclosure **11.** Once the fuel probe **12** and the fuel tank **2** are connected, fluid is simply exchanged from one to the other without back pressure to inhibit the flow.

As the probe **12** is retracted fuel stops flowing once the central tube **40** becomes fully retracted into the seal ring **32.** At the same time the plunger **58** seal the fuel tank as it mates with the upper lip on the receiving collar **50.** Finally the slip ring **34** is pushed back into the groove on the central tube **40** as illustrated in Fig. 7 and the seal is broken between the seal ring **38** and the receiving collar **50.**

An important feature of the present invention is that the apparatus of the present invention can be locked in the open position so the user can fill or empty the tank **2** without the use of the probe **12** if necessary, using a chainsaw bar tool or screwdriver.

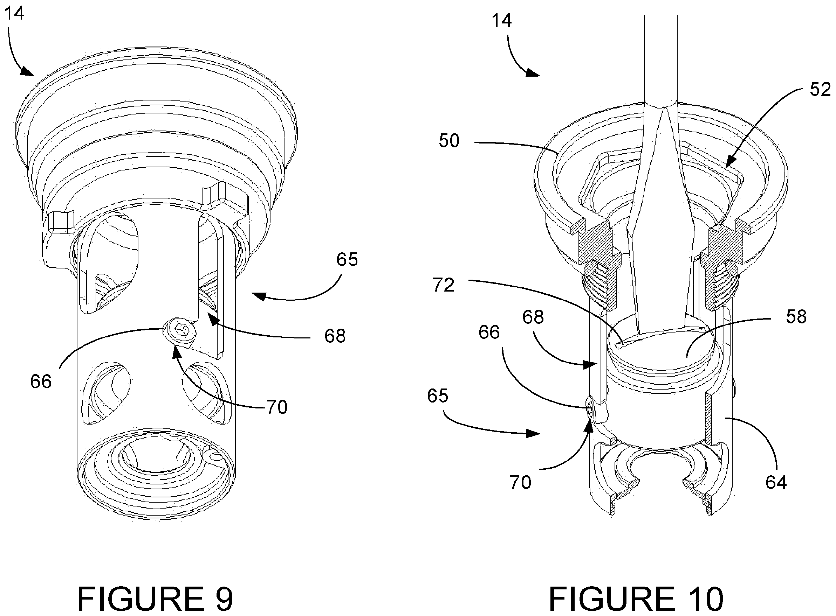

Referring now to Figs. 5A-B and Figs. 9 and 10, a slot **72** in the top of the plunger **58** and a lock-down mechanism **65** allow the user to press the plunger **58** down with a bar tool or screw driver and turn it to lock it in an open position. The lock-down mechanism preferably includes a lock-down screw **66** which travels down a lock-down channel **68** and is turned into a side passage **70** by rotation of the screw slot 72, where the lock-down screw **66** is captured. This locks the plunger **58** in the down position so that the saw can be filled with a traditional fuel container.

A further embodiment of the present invention includes a locking receiver which can be locked in either an open position or a closed position. This is a safety feature that ensures that the receiver cannot be opened even if the probe is installed. Thus, in the case of an accident or during transport there is no possibility of the receiver being opened and fuel or vapor escaping. This feature is engaged again by inserting a screw driver or "bar tool" into the slot on the plunger and turning it 45 degrees.

Referring now to Figs. 5A-B and Figs. 11 through 14, a slot **72** in the top of the plunger **58** and a locking mechanism **75** allow the user to press the plunger **58** down with a bar tool or screw driver and turn it to lock it in can be locked in either an open position or a closed position.

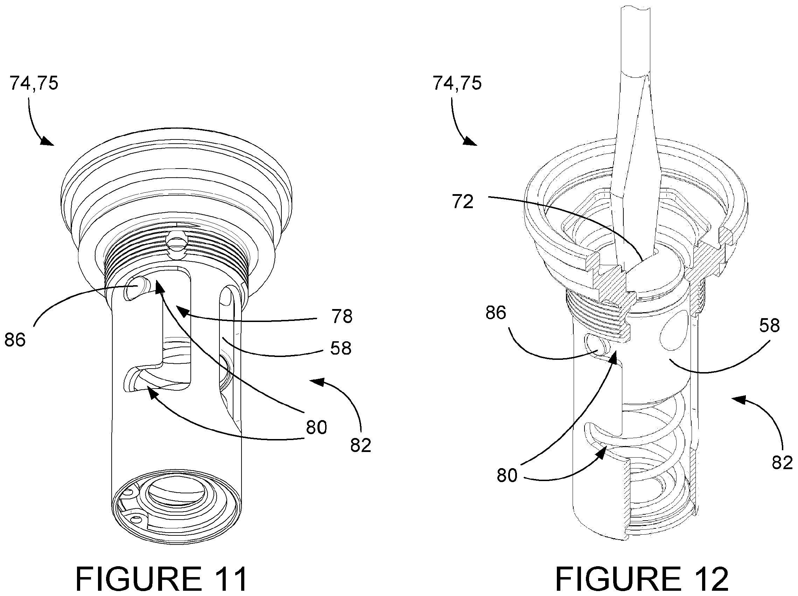

In Figures 11 and 12, the locking receiver **74** is shown in the locked closed position **82.** The locking mechanism **75** preferably includes a lock-down protrusion **86,** which could be a screw or pin, which travels down a locking channel **78** and is turned into one of two side passages **80** by rotation of the screw slot **72,** where the lock-down screw **66** is captured. This locks the plunger **58** in the locked closed **82** position so that the saw can be transported without fear of leakage or spillage.

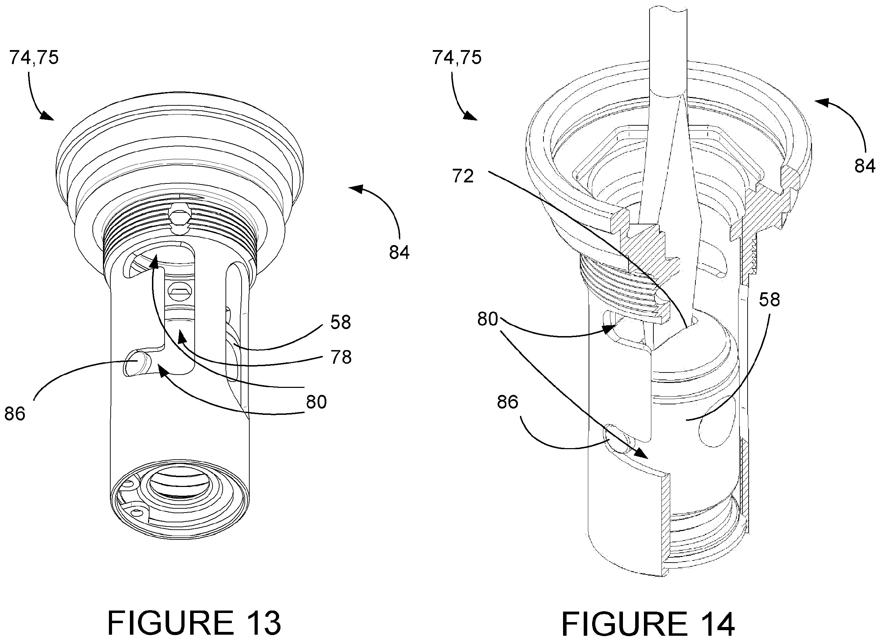

In Figures 13 and 14, the locking receiver **74** is shown in the locked open position **84.** The locking mechanism **75** preferably includes a lock-down protrusion **86,** which could be a screw or pin, which travels down a locking channel **78** and is turned into one of two side passages **80** by rotation of the screw slot **72,** where the locking screw **66** is captured. This locks the plunger **58** in the locked open **84** position so that the saw can be filled with a traditional fuel container.

The threaded adaptor **20** allows the present apparatus to be installed by hand (no tools needed) onto a standard fuel (SIG) bottle.

While various embodiments have been described above, it should be understood that they have been presented by way of example only, and not limitation.

### List of reference numerals used:

| | | | |
|---|---|---|---|
| 1. | chain saw | 52. | receiver aperture |
| 2. | fuel tank | 54. | 0-ring |
| 3. | input port | 56. | lower adaptor |
| 5. | fuel bottle | 58. | plunger |
| 10. | volatile liquids refueling apparatus | 60. | spring |
| 11. | vavur-lighl m:lusun:: | 62. | luwt:r svriug vlalt: |
| 12 | probe | 64. | receiver housing |
| 14 | receiver | 65. | lock-down mechanism |
| 20 | fuel bottle adaptor | 66. | lock-down screw |
| 22 | screw threads | 68. | lock-down channel |
| 24 | O-ring | 69. | lock channel |
| 26 | spring cup | 70. | side passage |
| 28 | spring | 72. | plunger slot |
| 30 | outer collar | 74. | locking receiver |
| 32 | seal ring | 76. | locking mechanism |
| 34 | slip ring | 78. | locking channel |
| 36. | aperture | 80. | side passages |
| 38. | detent | 82. | locked closed position |
| 40. | central tube | 84. | locked open position |
| 42. | vent tube | 86. | protrusion |
| 50. | receiver collar | | |

## Claims

1. A receiver for a volatile liquid refueling apparatus, comprising:
a receiver housing (64) configured with a locking channel (78) and two side passages (80); a receiver collar (50); a plunger (58) movable between an upper, closed position sealingly mating with an upper lip on the receiving collar (50) to block fluid flow and a down, open position to allow fluid flow; and a locking mechanism (75), for locking the plunger in either the open position or the closed position; , said locking mechanism (75) including a lock-down protrusion (86), such as a screw or pin, for travelling in the locking channel (78) and turnable into one of the two side passages (80) to be captured in a first one of the two side passages to lock the plunger in the closed position, which blocks fluid flow, and captured in the other one of the two side passages for locking the plunger in the open position which allows fluid flow; the plunger being locked in either the open position or the closed position by moving the plunger together with the lock-down protrusioin.

2. A volatile liquid refuelling apparatus (10), comprising:
a probe (12) including an outer collar (30); and a receiver (14) as claimed in claim 1, wherein said outer collar of said probe and said receiving collar of said receiver are configured to join to create a vapor-tight enclosure.

3. A vapor-tight compound enclosure, comprising:
a probe (12) including an outer collar (30); and a receiver (14) as claimed in claim 1, wherein said outer collar of said probe and said receiving collar of said receiver are configured to join to create a vapor-tight enclosure.

## Patentansprüche

1. Empfänger für eine Vorrichtung zur Nachfüllung flüchtiger Flüssigkeiten, umfassend:
Ein Empfängergehäuse (64), das mit einem Schließkanal (78) und zwei seitlichen Durchgängen (80) konfiguriert ist; einen Empfängerbund (50); einen Tauchkolben (58), der zwischen einer oberen, geschlossenen Position, die sich abdichtend mit einer oberen Lippe am Empfängerbund (50) verbindet, um Flüssigkeitsfluss zu blockieren, und einer unteren, offenen Position beweglich ist, um Flüssigkeitsfluss zu erlauben; und einen Verriegelungsmechanismus (75), zum Verriegeln des Tauchkolbens in entweder der offenen Position oder der geschlossenen Position; wobei der Verriegelungsmechanismus (75) einen Verriegelungsvorsprung (86), beispielsweise eine Schraube oder einen Stift, zum Laufen im Schließkanal (78) und drehbar in einen der zwei seitlichen Durchgänge (80) einschließt, um in einem ersten der zwei seitlichen Durchgänge erfasst zu werden, um den Tauchkolben in der geschlossenen Position zu verriegeln, welche den Flüssigkeitsfluss blockiert, und im anderen der zwei seitlichen Durchgänge erfasst zu werden, um den Tauchkolben in der offenen Position zu verriegeln, welche Flüssigkeitsfluss erlaubt; wobei der Tauchkolben entweder in der offenen Position oder der geschlossenen Position durch Bewegen des Tauchkolbens zusammen mit dem Verriegelungsvorsprung verriegelt wird.

2. Vorrichtung (10) zum Nachfüllen flüchtiger Flüssigkeiten, umfassend:
Eine Sonde (12), die einen äußeren Bund (30) einschließt; und einen Empfänger (14) wie in Anspruch 1 beansprucht, wobei der äußere Bund der Sonde und der aufnehmende Bund des Empfängers konfiguriert sind, sich zu verbinden, um ein dampfdichtes Gehäuse zu schaffen.

3. Dampfdichtes Verbundgehäuse, umfassend:
Eine Sonde (12), die einen äußeren Bund (30) einschließt; und einen Empfänger (14) wie in Anspruch 1 beansprucht, wobei der äußere Bund der Sonde und der aufnehmende Bund des Empfängers konfiguriert sind, sich zu verbinden, um ein dampfdichtes Gehäuse zu schaffen.

## Revendications

1. Récepteur pour un appareil de ravitaillement en liquide volatil, comprenant :
un boîtier (64) de récepteur configuré avec un conduit de verrouillage (78) et deux passages latéraux (80) ; un collier récepteur (50) ; un piston (58) pouvant être déplacé entre une position supérieure fermée s'accouplant de façon étanche avec un bord supérieur sur le collier récepteur (50) pour bloquer l'écoulement de fluide, et une position inférieure ouverte pour permettre l'écoulement de fluide ; et un mécanisme de verrouillage (75) assurant le verrouillage du piston soit dans la position ouverte, soit dans la position fermée, ledit mécanisme de verrouillage (75) comprenant une saillie de verrouillage (86), par exemple une vis ou une goupille, pour se déplacer dans le conduit de verrouillage (78) et pouvant être tournée dans un des deux passages latéraux (80) pour être saisie dans un premier des deux passages latéraux pour verrouiller le piston dans la position fermée, en bloquant ainsi l'écoulement du fluide, et saisie dans l'autre des deux passages latéraux pour verrouiller le piston dans la position ouverte, en permettant ainsi l'écoulement du fluide ; le piston étant verrouillé dans soit dans la position ouverte, soit dans la position fermée en déplaçant le piston conjointement avec la saillie de verrouillage.

2. Appareil de ravitaillement en liquide volatil (10), comprenant :
une sonde (12) dotée d'un collier extérieur (30) ; et un récepteur (14), selon la revendication 1, ledit collier extérieur de ladite sonde et ledit collier récepteur dudit récepteur étant configurés pour se joindre en créant une enceinte étanche à la vapeur.

3. Enceinte pour composé étanche à la vapeur, comprenant :
une sonde (12) dotée d'un collier extérieur (30) ; et un récepteur (14), selon la revendication 1, ledit collier extérieur de ladite sonde et ledit collier récepteur dudit récepteur étant configurés pour se joindre en créant une enceinte étanche à la vapeur.
